# EUROPÄISCHE PATENTANMELDUNG

(11) **EP 1 312 404 A1**
(43) Veröffentlichungstag der Anmeldung: **21.05.2003**
(21) Anmeldenummer: 02025556.8
(22) Anmeldetag: 14.11.2002
(51) Int. Cl.: B01D 3/00, B01D 3/42, C02F 1/14

(54) **Verfahren und Vorrichtung zum Destillieren von Wasser aus Meerwasser, Brackwasser oder anderen verunreinigten Wässern**

(30) Priorität: 15.11.2001 DE 10155985
(71) Anmelder: Von Poswik, Alexander, 82335 Berg (DE)
(72) Erfinder: Von Poswik, Alexander, 82335 Berg (DE)
(74) Vertreter: Lippich, Wolfgang, Dipl.-Phys, Dr.rer.nat.

(57) **Zusammenfassung**

Es werden Verfahren und Vorrichtung zum Destillieren von Wasser aus Meerwasser, Brackwasser oder anderen verunreinigten Wässern beschrieben, wobei das Wasser unter Zufuhr von Wärme durch einen Wärmeträger an einer Verdampfereinrichtung (101) verdampft, in einer Strömung innerhalb einer die Verdampfereinrichtung (101) und eine Kondensatoreinrichtung (102) einschließenden Umhüllung (105) zwischen der Verdampfereinrichtung (101) und der Kondensatoreinrichtung (102) transportiert und an der von einem Wärmeträger durchströmten Kondensatoreinrichtung (102) unter Abfuhr von Wärme durch den Wärmeträger kondensiert und gesammelt wird. In einem ersten Betriebszustand wird der Wärmeträger der Kondensatoreinrichtung (102) bei einer niedrigen Temperatur (T1') zugeführt. Erfindungsgemäß ist es vorgesehen, daß in einem zweiten Betriebszustand der Wärmeträger zu der Kondensatoreinrichtung (102; 202) mit einer Temperatur zugeführt wird, die höher als die niedrige Temperatur (T1') im ersten Betriebszustand ist und vorzugsweise nahe der hohen Temperatur (T2) ist.

## Beschreibung

Die Erfindung betrifft ein Verfahren zum Destillieren von Wasser aus Meerwasser, Brackwasser oder anderen verunreinigten Wässern, nach dem Oberbegriff des Anspruchs 1, sowie weiterhin eine Vorrichtung zum Destillieren von Wasser aus Meerwasser, Brackwasser oder anderen verunreinigten Wässern, nach dem Oberbegriff des Anspruchs 6.

Aus der DE 43 40 745 A1, aus der DE 199 29 212 A1 und aus der DE 199 29 213 A1 sind Verfahren und Vorrichtungen zum Destillieren von Wasser aus Meerwasser, Brackwasser oder anderen verunreinigten Wässern bekannt, bei denen das Wasser unter Zufuhr von Wärme durch einen Wärmeträger an einer Verdampfereinrichtung verdampft, in einer Strömung innerhalb einer die Verdampfereinrichtung und eine Kondensatoreinrichtung einschließenden Umhüllung zwischen der Verdampfereinrichtung und der Kondensatoreinrichtung transportiert, und an der von einem Wärmeträger durchströmten Kondensatoreinrichtung unter Abfuhr von Wärme durch einen Wärmeträger kondensiert und gesammelt wird, wobei in einem ersten Betriebszustand der Wärmeträger der Kondensatoreinrichtung bei einer niedrigen Temperatur zugeführt und nach dem Verlassen der Kondensatoreinrichtung wird.

Der genannte erste Betriebszustand stellt einen gewünschten Normalbetrieb dar, bei dem Wasser aus Meerwasser, Brackwasser oder anderen verunreinigten Wässern durch Destillieren gewonnen wird. Bei den bekannten Verfahren und Vorrichtungen besteht ein Nachteil darin, daß bei Anwendungen, bei denen beispielsweise ein Solarkollektorfeld oder eine andere Wärmequelle mit intermittierender Wärmeabgabe als externe Wärmequelle genutzt wird, während der Betriebspausen ein Absinken der Temperatur in Verdampfereinrichtung und Kondensatoreinrichtung stattfindet, die sich bei Wiederaufnahme des Betriebs möglicherweise nur langsam auf die optimale Betriebstemperatur erhöht. Eine weitere Problematik bei einer Gewinnung von Wasser aus Meerwasser, Brackwasser oder anderen verunreinigten Wässern in der beschriebenen Weise besteht darin, daß in der Verdampfereinrichtung und/oder in der Kondensatoreinrichtung oder in bestimmten Ortsbereichen von diesen Temperatur- und Feuchtigkeitsverhältnisse herrschen können, die ein Wachstum von schädlichen Mikroorganismen begünstigen können.

Die Aufgabe der Erfindung ist es, ein verbessertes Verfahren sowie eine verbesserte Vorrichtung zum Destillieren von Wasser aus Meerwasser, Brackwasser oder anderen verunreinigten Wässern der genannten Art anzugeben.

Verfahrensmäßig wird die gestellte Aufgabe durch das im Anspruch 1 angegebene Verfahren gelöst.

Vorrichtungsmäßig wird die gestellte Aufgabe durch die im Anspruch 6 angegebene Vorrichtung gelöst.

Bevorzugte Weiterbildungen von Verfahren und Vorrichtung sind in den jeweiligen Unteransprüchen angegeben.

Durch die Erfindung wird ein Verfahren zum Destillieren von Wasser aus Meerwasser, Brackwasser oder anderen verunreinigten Wässern geschaffen, bei dem das Wasser unter Zufuhr von Wärme durch einen Wärmeträger an einer Verdampfereinrichtung verdampft, in einer Strömung innerhalb einer die Verdampfereinrichtung und eine Kondensatoreinrichtung einschließenden Umhüllung zwischen der Verdampfereinrichtung und der Kondensatoreinrichtung transportiert und an der von einem Wärmeträger durchströmten Kondensatoreinrichtung unter Abfuhr von Wärme durch den Wärmeträger kondensiert und gesammelt. Die Wärme des Wärmeträgers wird nach dem Verlassen der Kondensatoreinrichtung zusammen mit durch eine externe Wärmequelle zugeführter Wärme bei einer hohe Temperatur zum Verdampfen des Wassers an der Verdampfereinrichtung verwendet. In einem ersten Betriebszustand wird der Wärmeträger der Kondensatoreinrichtung bei einer niedrigen Temperatur zugeführt. Erfindungsgemäß ist es vorgesehen, daß in einem zweiten Betriebszustand der Wärmeträger zu der Kondensatoreinrichtung mit einer Temperatur zugeführt wird, die höher ist als die niedrige Temperatur, mit der der Wärmeträger der Kondensatoreinrichtung während des ersten Betriebszustands zugeführt wird. In dem zweiten Betriebszustand wird der Wärmeträger zu der Kondensatoreinrichtung mit einer Temperatur zugeführt, die zwischen der niedrigen Temperatur und der hohen Temperatur, vorzugsweise nahe der hohen Temperatur liegt. Die Wärme des die Verdampfereinrichtung verlassenden Wärmeträgers wird in dem ersten Betriebszustand an die Umgebung oder anderweitig, d.h. auf eine andere Weise oder an einen anderen Ort, abgeführt und in dem zweiten Betriebszustand der Kondensatoreinrichtung zugeführt.

Ein Vorteil des erfindungsgemäßen Verfahrens ist es, daß in dem zweiten Betriebszustand die Verdampfereinrichtung und die Kondensatoreinrichtung mit einem geringen Energieeinsatz, der beispielsweise aus einem verhältnismäßig klein bemessenen Wärmespeicher gedeckt werden kann, auf einem hohen Temperaturniveau gehalten werden können, um beispielsweise Betriebspausen oder Zeiten zu überbrücken, während denen die externe Wärmequelle keine oder nur wenig Wärme liefert. Ein weiterer Vorteil des erfindungsgemäßen Verfahrens ist es, daß während des zweiten Betriebszustands die Verdampfereinrichtung und die Kondensatoreinrichtung auf einem hohen Temperaturniveau vollständig "durchgeheizt" werden können, um einem Wachstum von Mikroorganismen entgegenzutreten. Nach einer Rückkehr von dem zweiten Betriebszustand in den ersten Betriebszustand kann ausgehend von dem hohen Temperaturniveau der Destillationsbetrieb schnell und mit einem hohen Wirkungsgrad wieder aufgenommen werden.

Vorzugsweise wird die Wärme des die Kondensatoreinrichtung verlassenden Wärmeträgers zusammen mit der Wärme der externen Wärmequelle der Verdampfereinrichtung zugeführt.

Vorzugsweise wird ein und derselbe Wärmeträger nacheinander durch die Kondensatoreinrichtung und durch die Verdampfereinrichtung geführt, wobei der Wärmeträger nach dem Verlassen der Kondensatoreinrichtung durch die externe Wärmequelle auf die hohe Temperatur aufgeheizt und der Verdampfereinrichtung zugeführt wird.

Gemäß einer bevorzugten Ausführungsform des erfindungsgemäßen Verfahrens ist es vorgesehen, daß der Wärmeträger eine von den verunreinigten Wässern verschiedene Flüssigkeit ist und in der Verdampfereinrichtung durch flüssigkeitsundurchlässige, jedoch gut wärmeleitende Wandungen von den verunreinigten Wässern getrennt ist, und daß der Wärmeträger in dem ersten Betriebszustand nach dem Verlassen der Verdampfereinrichtung gekühlt und/oder mit kaltem Wärmeträger gemischt und/oder durch kalten Wärmeträger ersetzt und der Kondensatoreinrichtung zugeführt wird, und daß der Wärmeträger in dem zweiten Betriebszustand nach dem Verlassen der Verdampfereinrichtung im wesentlichen ohne Kühlung direkt der Kondensatoreinrichtung zugeführt wird. Ein Vorteil der Trennung des Wärmeträgers von den verunreinigten Wässern ist es, daß die jeweiligen Massendurchsätze unabhängig voneinander auf optimale Werte eingestellt werden können. Ein anderer Vorteil ist es, daß ein in Hinblick auf Korrosionsverhalten, Frostschutz etc. günstiger Wärmeträger verwendet werden kann, so daß an die externe Wärmequelle, z.B. Solarkollektoren, Rohrleitungen, Pumpen etc. keine besonderen Anforderungen hinsichtlich des Korrosionsverhaltens gestellt werden müssen.

Gemäß einer alternativen Ausführungsform des erfindungsgemäßen Verfahrens ist es vorgesehen, daß die verunreinigten Wässer selbst der Wärmeträger sind, wobei in der Verdampfereinrichtung ein Teil des Wassers aus den verunreinigten Wässern verdampft wird, und daß der Wärmeträger in dem ersten Betriebszustand nach dem Verlassen der Verdampfereinrichtung gekühlt und/oder mit kaltem Wärmeträger gemischt und/oder durch kalten Wärmeträger ersetzt und der Kondensatoreinrichtung zugeführt wird, und daß der Wärmeträger in dem zweiten Betriebszustand nach dem Verlassen der Verdampfereinrichtung ohne Kühlung direkt der Kondensatoreinrichtung zugeführt wird. Der Vorteil hiervon ist ein einfacher und kostengünstiger Aufbau der Verdampfereinrichtung.

Gemäß einer vorteilhaften Ausgestaltung des erfindungsgemäßen Verfahrens kann es, sowohl wenn ein von den verunreinigten Wässern getrennter Wärmeträger vorgesehen ist, als auch wenn die verunreinigten Wässer selbst als Wärmeträger verwendet werden, vorgesehen sein, daß der Wärmeträger im ersten Betriebszustand in einem im wesentlichen geschlossenen Kreislauf durch die Kondensatoreinrichtung und die Verdampfereinrichtung geführt wird, und daß der Wärmeträger auch im zweiten Betriebszustand in einem im wesentlichen geschlossenen Kreislauf durch die Kondensatoreinrichtung und die Verdampfereinrichtung geführt wird.

Gemäß einer anderen Ausgestaltung des erfindungsgemäßen Verfahrens kann es, insbesondere wenn die verunreinigten Wässer selbst als Wärmeträger verwendet werden, vorgesehen werden, daß der Wärmeträger im ersten Betriebszustand in einem offenen Kreislauf durch die Kondensatoreinrichtung und die Verdampfereinrichtung geführt wird, und daß der Wärmeträger im zweiten Betriebszustand in einem im wesentlichen geschlossenen Kreislauf durch die Kondensatoreinrichtung und die Verdampfereinrichtung geführt wird.

Bei der letztgenannten Ausgestaltung ist es insbesondere von Vorteil, wenn der Wärmeträger in Form von Meerwasser, Brackwasser oder anderen verunreinigten Wässern aus der Umgebung zu der Kondensatoreinrichtung zugeführt und nach dem Verlassen der Verdampfereinrichtung in dem ersten Betriebszustand in die Umgebung abgegeben wird.

Gemäß einer sehr vorteilhaften Weiterbildung des erfindungsgemäßen Verfahrens ist es vorgesehen, daß die Verdampfereinrichtung und die Kondensatoreinrichtung jeweils in einer Längsrichtung ausgedehnte Gebilde sind, die jeweils ein erstes Ende mit höherer Temperatur und ein zweites Ende mit niedrigerer Temperatur aufweisen, und im Gegenstrom zueinander von dem Wärmeträger durchströmt werden, wobei die Verdampfereinrichtung vom ersten Ende zum zweiten Ende hin von dem Wärmeträger durchströmt wird, und die Kondensatoreinrichtung im Gegenstrom dazu vom zweiten Ende zum ersten Ende hin von dem Wärmeträger durchströmt wird, und daß im zweiten Betriebszustand der Wärmeträger vom zweiten Ende der Verdampfereinrichtung zum zweiten Ende der Kondensatoreinrichtung zurückgeleitet wird. Ein wesentlicher Vorteil dieser Ausgestaltung ist es, daß in dem ersten Betriebszustand das Destillieren des Wassers unter Ausnutzung des Gegenstromprinzips mit einem hohen Wirkungsgrad durchgeführt werden kann, während in dem zweiten Betriebszustand diejenigen Bereiche von Kondensatoreinrichtung und Verdampfereinrichtung, die im ersten Betriebszustand eine niedrige Temperatur aufweisen, auf einem hohen Temperaturniveau "durchgeheizt" werden können, um einem Wachstum von Mikroorganismen entgegenzutreten. Ein weiterer Vorteil ist es, daß in dem zweiten Betriebszustand, insbesondere während Betriebspausen, Verdampfereinrichtung und Kondensatoreinrichtung mit einem verhältnismäßig geringen Wärmeeinsatz auf einem hohen Temperaturniveau gehalten werden können, wonach beim Übergang in den ersten Betriebszustand das Destillieren des Wassers sofort ausgehend von dem genannten hohen Temperaturniveau mit einem hohen Wirkungsgrand wieder aufgenommen werden kann.

Schließlich kann es vorgesehen sein, daß in dem zweiten Betriebszustand ein Wärmespeicher als externe Wärmequelle verwendet wird. Ein solcher Wärmespeicher kann mit einer verhältnismäßig geringen Kapazität vorgesehen werden, da in dem zweiten Betriebszustand im wesentlichen nur Wärmeverluste ausgeglichen werden müssen, nicht jedoch die zum Destillieren des Wassers erforderliche hohe Wärmemenge aufgebracht werden muß.

Weiterhin wird durch die Erfindung eine Vorrichtung zum Destillieren von Wasser aus Meerwasser, Brackwasser oder anderen verunreinigten Wässern geschaffen, mit einer von einem Wärmeträger durchströmten Verdampfereinrichtung zum Verdampfen des Wassers unter Zufuhr von Wärme durch den Wärmeträger, einer von einem Wärmeträger durchströmten Kondensatoreinrichtung zum Kondensieren des Wassers unter Abfuhr von Wärme durch den Wärmeträger, wobei in einem ersten Betriebszustand der Wärmeträger der Kondensatoreinrichtung bei einer niedrigen Temperatur zuführbar ist, einer an der Kondensatoreinrichtung angeordneten Vorrichtung zum Sammeln des kondensierten Wassers, einer die Verdampfereinrichtung und die Kondensatoreinrichtung einschließenden Umhüllung, welche einen Strömungsweg für eine das verdampfte Wasser zwischen Verdampfereinrichtung und Kondensatoreinrichtung transportierende Strömung begrenzt. Die Wärme des die Kondensatoreinrichtung verlassenden Wärmeträgers ist zusammen mit der Wärme einer externen Wärmequelle bei einer hohen Temperatur der Verdampfereinrichtung zuführbar. Erfindungsgemäß ist es vorgesehen, daß in einem zweiten Betriebszustand der Wärmeträger zu der Kondensatoreinrichtung mit einer Temperatur zuführbar ist, die höher ist als die niedrige Temperatur, mit der der Wärmeträger der Kondensatoreinrichtung während des ersten Betriebszustands zuführbar ist. In dem zweiten Betriebszustand ist der Wärmeträger zu der Kondensatoreinrichtung mit einer Temperatur zuführbar, die zwischen der niedrigen Temperatur und der hohen Temperatur, vorzugsweise nahe der hohen Temperatur liegt.
Die Wärme des die Verdampfereinrichtung verlassenden Wärmeträgers ist in dem ersten Betriebszustand an die Umgebung oder anderweitig, d.h. auf eine andere Weise oder an einen anderen Ort, abführbar und in dem zweiten Betriebszustand der Kondensatoreinrichtung zuführbar.

Ein Vorteil der erfindungsgemäßen Vorrichtung ist es, daß in dem zweiten Betriebszustand die Kondensatoreinrichtung und die Verdampfereinrichtung mit einem verhältnismäßig geringen Wärmeeinsatz auf einem hohen Temperaturniveau gehalten werden können. Hierdurch können zum einen Betriebspausen mit geringem Wärmeeinsatz überbrückt werden, nach denen dann ausgehend von dem hohen Temperaturniveau sehr schnell der Betrieb im ersten Betriebszustand mit einem hohen Wirkungsgrad wieder aufgenommen werden kann, was ein großer Vorteil ist. Ein anderer großer Vorteil ist, daß in dem zweiten Betriebszustand die Verdampfereinrichtung und die Kondensatoreinrichtung auf dem hohen Temperaturniveau vollständig "durchgeheizt" werden können, was günstig ist, um einem schädlichen Wachstum von Mikroorganismen entgegenzutreten.

Gemäß einer vorteilhaften Ausführungsform der erfindungsgemäßen Vorrichtung ist diese so ausgestaltet, daß ein und derselbe Wärmeträger nacheinander durch die Kondensatoreinrichtung und durch die Verdampfereinrichtung geführt wird, wobei der Wärmeträger nach dem Verlassen der Kondensatoreinrichtung durch die externe Wärmequelle auf die hohe Temperatur aufheizbar und der Verdampfereinrichtung zuführbar ist.

Eine vorteilhafte Ausführungsform der erfindungsgemäßen Vorrichtung sieht es vor, daß die Verdampfereinrichtung flüssigkeitsundurchlässige aber jedoch gut wärmeleitende Wandungen aufweist, um den Wärmeträger, der eine von den verunreinigten Wässern verschiedene Flüssigkeit ist, von den verunreinigten Wässern zu trennen, und daß der Wärmeträger in dem ersten Betriebszustand nach dem Verlassen der Verdampfereinrichtung in einer Kühleinrichtung gekühlt und/oder mit kaltem Wärmeträger gemischt und/oder durch kalten Wärmeträger ersetzt wird und der Kondensatoreinrichtung zuführbar ist, und daß eine Bypass-Leitungsverbindung vorgesehen ist, über die der Wärmeträger in dem zweiten Betriebszustand nach dem Verlassen der Verdampfereinrichtung im wesentlichen ohne Kühlung direkt der Kondensatoreinrichtung zuführbar ist. Ein Vorteil dieser Ausführungsform ist es, daß der Massendurchsatz an Wärmeträger und verunreinigten Wässern unabhängig voneinander auf optimale Werte einstellbar und damit ein hoher Wirkungsgrad erreichbar ist. Ein anderer Vorteil ist es, daß als Wärmeträger eine Flüssigkeit verwendet werden kann, die im Gegensatz zu den verunreinigten Wässern keine korrosive Wirkung ausüben.

Gemäß einer alternativen Ausgestaltung der erfindungsgemäßen Vorrichtung ist die Verdampfereinrichtung so ausgebildet, daß die verunreinigten Wässer selbst als Wärmeträger verwendbar sind, wobei in der Verdampfereinrichtung ein Teil des Wassers aus den verunreinigten Wässern verdampft wird, und daß der Wärmeträger in dem ersten Betriebszustand nach dem Verlassen der Verdampfereinrichtung in einer Kühleinrichtung gekühlt und/oder mit kalten Wärmeträger gemischt und/oder durch kalten Wärmeträger ersetzt wird und der Kondensatoreinrichtung zuführbar ist, und daß eine Bypass-Leitungsverbindung vorgesehen ist, über die der Wärmeträger in dem zweiten Betriebszustand nach dem Verlassen der Verdampfereinrichtung ohne Kühlung direkt der Kondensatoreinrichtung zuführbar ist.

Es kann, insbesondere bei den Vorrichtungen, bei denen der Wärmeträger eine von den verunreinigten Wässern verschiedenen Flüssigkeit und in der Verdampfereinrichtung durch flüssigkeitsundurchlässige, jedoch gut wärmeleitende Wandungen von den verunreinigten Wässern getrennt ist, ein im wesentlichen geschlossenen Kreislauf vorgesehen sein, durch den der Wärmeträger im ersten Betriebszustand durch die Kondensatoreinrichtung und die Verdampfereinrichtung geführt wird, und daß ein im wesentlichen geschlossener Kreislauf vorgesehen ist, durch den der Wärmeträger im zweiten Betriebszustand durch die Kondensatoreinrichtung und die Verdampfereinrichtung geführt wird.

Gemäß einer alternativen Ausführungsform kann insbesondere bei den Ausgestaltungen der erfindungsgemäßen Vorrichtung, bei den die verunreinigten Wässer selbst der Wärmeträger sind, ein offener Kreislauf vorgesehen sein, durch den der Wärmeträger im ersten Betriebszustand durch die Kondensatoreinrichtung und die Verdampfereinrichtung geführt wird, und ein im wesentlichen geschlossener Kreislauf, durch den der Wärmeträger im zweiten Betriebszustand durch die Kondensatoreinrichtung und die Verdampfereinrichtung geführt wird. Ein Vorteil dieser Ausführungsform ist es, daß der Wärmeträger in Form von Meerwasser, Brackwasser oder anderen verunreinigten Wässern aus der Umgebung der Kondensatoreinrichtung zugeführt und nach dem Verlassen der Verdampfereinrichtung in dem ersten Betriebszustand wieder in die Umgebung abgegeben werden kann.

Weiterhin kann es vorgesehen sein, daß der Wärmeträger in Form von Meerwasser, Brackwasser oder anderen verunreinigten Wässern aus der Umgebung als Wärmeträger der Kondensatoreinrichtung zugeführt und nach dem Verlassen der Verdampfereinrichtung in dem ersten Betriebszustand in die Umgebung abgegeben wird.

Gemäß einer sehr vorteilhaften Ausführungsform der erfindungsgemäßen Vorrichtung ist es vorgesehen, daß die Verdampfereinrichtung und die Kondensatoreinrichtung jeweils in einer Längsrichtung ausgedehnte Gebilde sind, die jeweils ein erstes Ende mit höherer Temperatur und ein zweites Ende mit niedrigerer Temperatur aufweisen und im Gegenstrom zueinander von dem Wärmeträger durchströmbar sind, wobei die Verdampfereinrichtung vom ersten Ende zum zweiten Ende hin von dem Wärmeträger durchströmbar ist und die Kondensatoreinrichtung im Gegenstrom dazu vom zweiten Ende zum ersten Ende hin von dem Wärmeträger durchströmbar ist, und daß eine Bypass-Leitungsverbindung vorgesehen ist, über die der Wärmeträger im zweiten Betriebszustand vom zweiten Ende der Verdampfereinrichtung zum zweiten Ende der Kondensatoreinrichtung führbar ist. Ein Vorteil dieser Ausführungsform ist es, daß im ersten Betriebszustand der Destilliervorgang unter Nutzung des Gegenstromprinzips mit einem hohen Wirkungsgrad vorgenommen werden kann und im zweiten Betriebszustand, insbesondere während Betriebspausen, die Vorrichtung mit geringem Wärmeeinsatz auf einem hohen Temperaturniveau gehalten werden kann. Dies ermöglicht es zum einen, bei Wiederaufnahme des Betriebs im ersten Betriebszustand ausgehend von dem hohen Temperaturniveau den Destilliervorgang schnell wieder mit einem hohen Wirkungsgrad aufzunehmen, und während der Betriebspausen kann die Vorrichtung in dem zweiten Betriebszustand auf hohen Temperaturniveau "druchgeheizt" werden, um einem schädlichen Wachstum von Mikroorganismen entgegenzutreten.

Weiter ist es gemäß einer vorteilhaften Ausführungsform der erfindungsgemäßen Vorrichtung vorgesehen, daß die externe Wärmequelle einen Wärmespeicher umfaßt, mit dessen Wärme zumindest im zweiten Betriebszustand der Wärmeträger aufheizbar ist. Ein solcher Wärmespeicher kann mit einer verhältnismäßig kleinen Kapazität vorgesehen sein, um in dem zweiten Betriebszustand die Vorrichtung auf dem hohen Temperaturniveau zu halten. Zusätzlich kann ein solcher Wärmespeicher, insbesondere wenn er mit einer höheren Wärmekapazität vorgesehen ist, auch zum Betrieb in dem ersten Betriebszustand vorgesehen sein.

Schließlich kann eine automatische Steuereinrichtung zum Umschalten zwischen dem ersten Betriebszustand und dem zweiten Betriebszustand vorgesehen sein.

Eine solche Steuereinrichtung kann zeitgesteuert, in Abhängigkeit von Parametern, wie der Abgabe von Wärme durch die externe Wärmequelle der Temperatur im Wärmespeicher oder anderen geeigneten Parametern arbeiten.

Im folgenden werden Ausführungsbeispiele von Verfahren und Vorrichtung zum Destillieren von Wasser aus Meerwasser, Brackwasser oder anderen verunreinigten Wässern gemäß der Erfindung beschrieben.

### Es zeigen:

Figur 1 eine schematisierte Blockdarstellung einer Vorrichtung zum Destillieren von Wasser aus Meerwasser, Brackwasser oder anderen verunreinigten Wässern gemäß einem ersten Ausführungsbeispiel der Erfindung;
Figur 2 eine schematisierte Blockdarstellung einer Vorrichtung zum Destillieren von Wasser aus Meerwasser, Brackwasser oder anderen verunreinigten Wässern gemäß einem zweiten Ausführungsbeispiel der Erfindung; und
Figur 3 eine schematisierte Blockdarstellung einer Vorrichtung zum Destillieren von Wasser aus Meerwasser, Brackwasser oder anderen verunreinigten Wässern gemäß einem dritten Ausführungsbeispiel der Erfindung.

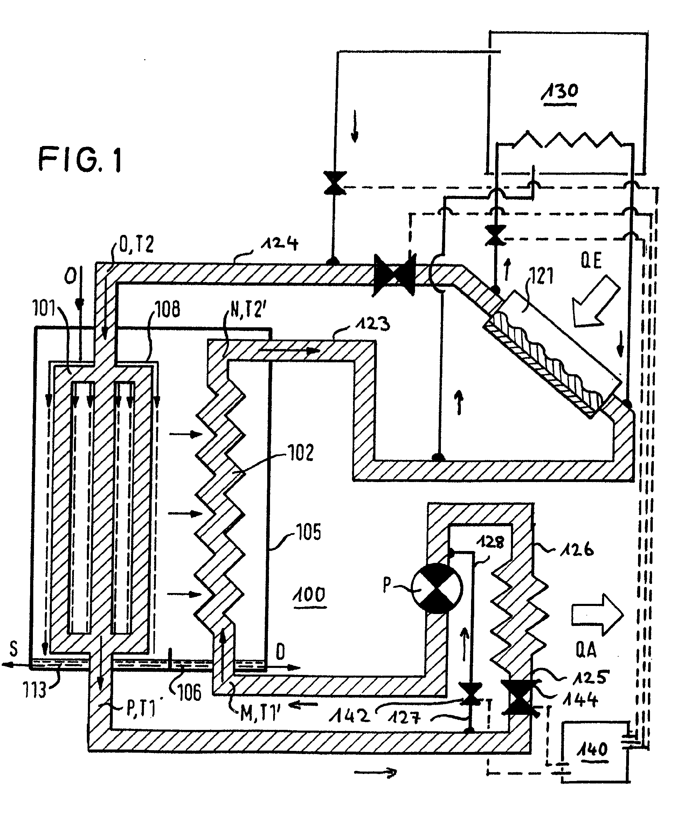

Figur 1 zeigt in einer schematisierten Blockdarstellung eine Vorrichtung zum Destillieren von Wasser aus Meerwasser, Brackwasser und anderen verunreinigten Wässern gemäß einem ersten Ausführungsbeispiel der Erfindung. Die insgesamt mit dem Bezugszeichen 100 versehene Destillationsvorrichtung dient zum Destillieren von Meerwasser, Brackwasser, etwa salzigem Brunnenwasser, oder anderen verunreinigten Wässern, wie Oberflächenwasser oder verunreinigtem Flußwasser o.ä.. Die Destillationsvorrichtung 100 enthält eine Verdampfereinrichtung 101 und eine Kondensatoreinrichtung 102, die in einem gemeinsamen Gehäuse oder einer gemeinsamen Umhüllung 105 angeordnet sind.

Beim Betrieb der Vorrichtung bzw. bei dem erfindungsgemäßen Verfahren wird der Verdampfereinrichtung 101 bei 0 ein Wärmeträger mit hoher Temperatur T2 zugeführt und dieser durchströmt die Verdampfereinrichtung 101 wie durch die Pfeile gezeigt. Der Kondensatoreinrichtung 102 wird ein Wärmeträger, der bei dem hier beschriebenen ausführungsbeispielmderselbe Wärmeträger ist, aber auch ein anderer Wärmeträger sein kann, bei niedriger Temperatur T1' bei M zugeführt und durchströmt die Kondensatoreinrichtung 102 in der durch die Pfeile dargestellten Richtung, hier im Gegenstrom zu der Strömung des Wärmeträgers in der Verdampfereinrichtung. In der Verdampfereinrichtung 101 ist der Wärmeträger durch flüssigkeitsundurchlässige, jedoch gut wärmeleitende Wandungen hermetisch eingeschlossen. Auf der Oberfläche der Verdampfereinrichtung 101 werden die verunreinigten Wässer, die bei I zugeführt werden, verteilt. Der Wärmeträger und die verunreinigten Wässer sind an der Verdampfereinrichtung 101 also hermetisch voneinander getrennt.

Unter Zufuhr und Abgabe von Wärme aus dem Wärmeträger durch die Wandungen der Verdampfereinrichtung 101 hindurch wird aus den verunreinigten Wässern Wasser verdampft bzw. verdunstet, und in einer durch Pfeile lediglich andeutungsweise dargestellten Strömung von der Verdampfereinrichtung 101 zur Kondensatoreinrichtung 102 transportiert und dort unter Aufnahme und Abfuhr der Kondensationswärme durch den die Kondensatoreinrichtung 102 durchströmenden Wärmeträger kondensiert und in einer Vorrichtung 106 zum Sammeln des kondensierten Wassers gesammelt. Das verdampfte und wieder kondensierte (destillierte) Wasser ist frei von Salzen und anderen Verunreinigungen, die in den zugeführten verunreinigten Wässern enthalten waren und kann bei D entnommen werden. Durch Abgabe von Wärme beim Verdampfen des Wassers kühlt der Wärmeträger an der Verdampfereinrichtung 101 von der Eingangstemperatur T2 bei O auf eine Ausgangstemperatur T1 bei P ab. Nach Abgabe von weiterer Wärme QA, etwa in einem Wärmetauscher 122 oder durch Mischen mit kälterem Wärmeträger oder durch Ersetzen durch kälteren Wärmeträger, wird der Wärmeträger mit der niedrigen Temperatur T1', die niedriger als die Temperatur T1 ist, bei M der Kondensatoreinrichtung 102 zugeführt und durchströmt diese. Beim Durchströmen der Kondensatoreinrichtung 102 nimmt der Wärmeträger die beim Kondensieren des Wassers freiwerdende Kondensationswärme auf und erwärmt sich, wobei der Wärmeträger die Kondensatoreinrichtung 102 bei N mit einer Temperatur T2' verläßt, welche niedriger als die Temperatur T2 ist, mit der der Wärmeträger am ersten Ende A in die Verdampfereinrichtung 101 eintritt. Zwischen dem Verlassen der Kondensatoreinrichtung 102 und dem Eintreten in die Verdampfereinrichtung 101 wird der Wärmeträger mittels einer externen Wärmequelle 122, beispielsweise mittels eines Solarkollektors, durch den der Wärmeträger mittels einer Pumpe P gepumpt wird, von der Temperatur T2' auf die Temperatur T2 erwärmt. Dieser Betrieb stellt einen ersten Betriebszustand der Destillationsvorrichtung 100 dar.

Der Wärmeträger wird über eine Leitungsverbindung 123 vom Punkt N der Kondensatoreinrichtung 102 zu der externen Wärmequelle 121 und über eine Leitungsverbindung 124 von der externen Wärmequelle 121 zum Punkt O der Kondensatoreinrichtung 101 geführt. In dem ersten Betriebszustand wird der Wärmeträger vom Punkt P der Verdampfereinrichtung 101 über eine Leitungsverbindung 125 zu der Kühleinrichtung 122 und über eine Leitungsverbindung 126 von der Kühleinrichtung 122 zum Punkt M der Kondensatoreinrichtung 102 geführt. In dem ersten Betriebszustand bilden die Leitungsverbindungen 123, 124, 125, 126 zusammen mit der Verdampfereinrichtung 101, der Kühleinrichtung 122, der Kondensatoreinrichtung 102 und der externen Wärmequelle 121 einen geschlossenen Kreislauf für den Wärmeträger, welcher durch die Pumpe P angetrieben wird.

Zwischen dem Punkt P der Verdampfereinrichtung 101 und dem Punkt M der Kondensatoreinrichtung 102 ist eine Bypass-Leitungsverbindung 127, 128 vorgesehen, durch die der Wärmeträger in einem zweiten Betriebszustand nach dem Verlassen der Verdampfereinrichtung 101 ohne Kühlung direkt der Kondensatoreinrichtung 102 zuführbar ist. Auf diese Weise wird in dem zweiten Betriebszustand der Wärmeträger zu der Kondensatoreinrichtung 102 mit einer Temperatur zugeführt, die höher ist als die niedrige Temperatur T1', mit der der Wärmeträger der Kondensatoreinrichtung 102 im ersten Betriebszustand über die Kühleinrichtung 122 zugeführt wird. Diese Temperatur, mit der der Wärmeträger in dem zweiten Betriebszustand zu der Kondensatoreinrichtung 102 zugeführt wird, liegt vorzugsweise nahe bei der hohen Temperatur T2 bzw. ist bei einer entsprechende guten Isolierung der Umhüllung 105 und der Bypass-Leitungsverbindung 127, 128 praktisch die Temperatur T2. In dem zweiten Betriebszustand wird somit das Innere der Destillationseinrichtung 100, insbesondere die Verdampfereinrichtung 101 und die Kondensatoreinrichtung 102 bei hoher Temperatur, die im wesentlichen die Temperatur T2 ist, "durchgeheizt", wobei die externe Wärmequelle 121 im wesentlichen nur die Wärme liefern muß, die zum Ausgleichen von Wärmeverlusten notwendig ist, nicht jedoch, weil im wesentlichen keine Wärme von der Kondensatoreinrichtung 102 abgeführt wird, die Wärme zum Destillieren wesentlicher Mengen von Wasser in der Destillationseinrichtung 100.

Ein Wärmespeicher 130, der zusätzlich zu der externen Wärmequelle 121 vorgesehen oder in dieser enthalten sein kann und von dieser geladen wird, kann dazu verwendet werden, in dem zweiten Betriebszustand die erforderliche Wärme zu liefern. Dies insbesondere, wenn die externe Wärmequelle 121 nur intermittierend Wärme liefert, wie es etwa bei einem Sonnenkollektor der Fall ist. Selbstverständlich kann der Wärmespeicher 130 auch dazu verwendet werden, im ersten Betriebszustand Wärme zum Destillieren von Wasser zu liefern.

Die Wärme des die Verdampfereinrichtung 101 verlassenden Wärmeträgers wird in dem ersten Betriebszustand über die Kühleinrichtung 122 an die Umgebung abgeführt, und in den zweiten Betriebszustand wird diese Wärme über die Bypass-Leitungsverbindung 127, 128 ohne Kühlung direkt der Kondensatoreinrichtung 102 zugeführt. Das Umschalten zwischen der Leitungsverbindung 125, 126, welche den Wärmeträger durch die Kühleinrichtung 122 führt, und der Bypass-Leitungsverbindung 127, 128 erfolgt durch Ventile 142, 144, diese können manuell betätigt werden oder mittels einer automatischen Steuereinrichtung 140. Eine solche Steuereinrichtung 140 kann zeitgesteuert arbeiten oder in Abhängigkeit von Parametern wie der Abgabe von Wärme durch die externe Wärmequelle 121, der Temperatur im Wärmespeicher 130 oder anderen geeigneten Parametern.

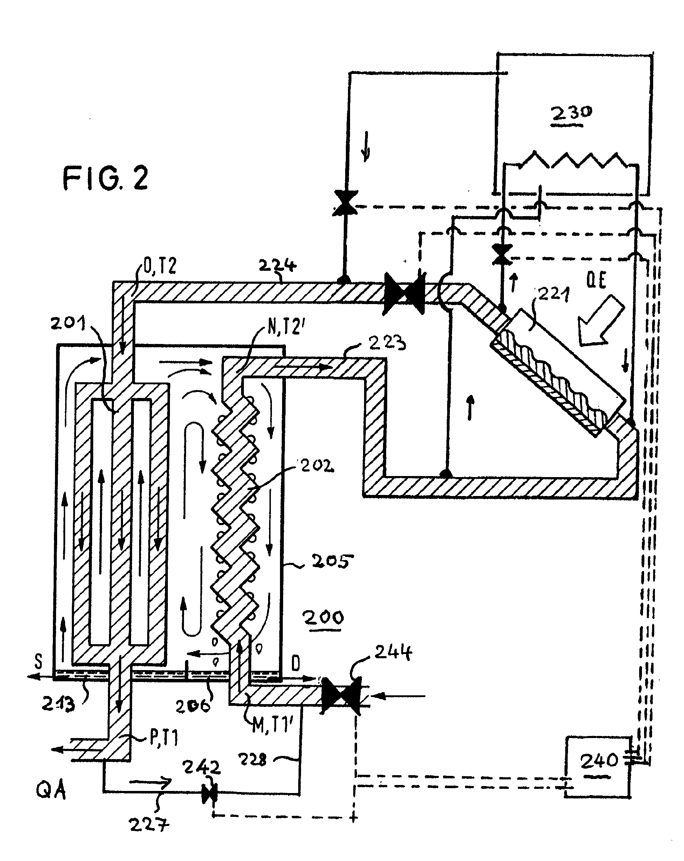

Bei dem in Figur 2 dargestellten zweiten Ausführungsbeispiel ist eine Vorrichtung zum Destillieren von Wasser aus Meerwasser, Brackwasser oder anderen verunreinigten Wässern dargestellt, die insgesamt mit dem Bezugszeichen 200 bezeichnet ist. Ähnlich wie bei dem in Figur 1 dargestellten ersten Ausführungsbeispiel enthält die Destillationsvorrichtung 200 eine Verdampfereinrichtung 201 und eine Kondensatoreinrichtung 202, die in einem gemeinsamen Gehäuse oder einer gemeinsamen Umhüllung 205 angeordnet sind.

Abweichend von dem in Figur 1 dargestellten ersten Ausführungsbeispiel werden hier jedoch die verunreinigten Wässer selbst als Wärmeträger verwendet. Diese werden bei M der Kondensatoreinrichtung 202 zugeführt, wobei sie die bei der Kondensation anfallende Kondensationswärme aufnehmen und bei N die Kondensatoreinrichtung 202 verlassen und in der externen Wärmequelle 221, beispielsweise wieder einem Solarkollektor, auf die hohe Temperatur T2 erwärmt und bei O der Oberseite der Verdampfereinrichtung 201 zugeführt werden. In der Verdampfereinrichtung 201 rieseln die selbst als Wärmeträger verwendeten verunreinigten Wässer frei an einer Verdampferoberfläche nach unten, wobei ein Teil des Wassers verdampft und innerhalb der Umhüllung 205 zu der Kondensatoreinrichtung 202 transportiert und dort unter Abgabe von Wärme an den Wärmeträger in Form der verunreinigten Wässer kondensiert wird. Das kondensierte Wasser wird in einer Vorrichtung 206 zum Sammeln des kondensierten Wassers gesammelt und kann bei D entnommen werden.

In diesem ersten Betriebszustand werden die als Wärmeträger verwendeten verunreinigten Wässer über eine Leitungsverbindung 226 aus der Umgebung, d.h. einem natürlichen oder künstlichen Wasservorrat, am Punkt M der Kondensatoreinrichtung 202 zugeführt. Vom Punkt P der Verdampfereinrichtung 201 werden die als Wärmeträger verwendeten verunreinigten Wässer, abzüglich des vergleichsweise geringen Teils des verdampften Wassers, wieder an die Umgebung abgegeben.

In einem zweiten Betriebszustand werden die als Wärmeträger verwendeten verunreinigten Wässer nach dem Verlassen der Verdampfereinrichtung 201 vom Punkt P dem Punkt M der Kondensatoreinrichtung 202 zugeführt, wofür eine Bypass-Leitungsverbindung 227, 228 vorgesehen ist. Somit werden die als Wärmeträger dienenden verunreinigten Wässer im ersten Betriebszustand in einem offenen Kreislauf durch die Kondensatoreinrichtung 202 und die Verdampfereinrichtung 201 geführt, wogegen die als Wärmeträger dienenden verunreinigten Wässer im zweiten Betriebszustand in einem geschlossenen Kreislauf durch die Kondensatoreinrichtung 202 und die Verdampfereinrichtung 201 geführt werden.

In dem zweiten Betriebszustand ist die Temperatur, mit der die als Wärmeträger dienenden verunreinigten Wässer über die Bypass-Leitungsverbindung 227, 228 vom Punkt P der Verdampfereinrichtung 201 zum Punkt M der Kondensatoreinrichtung 202 zugeführt werden, höher als die niedrige Temperatur T1', mit der die als Wärmeträger dienenden verunreinigten Wässer während des ersten Betriebszustandes über den offenen Kreislauf 226, 225 zu der Kondensatoreinrichtung 202 zugeführt werden. Diese Temperatur liegt bei guter Isolierung der Umhüllung 205 und der Bypass-Leitungsverbindung 227, 228 nahe der hohen Temperatur T2, mit der die als Wärmeträger dienenden verunreinigten Wässer der Verdampfereinrichtung 201 beim Punkt O von der externen Wärmequelle 221 zugeführt werden. Somit wird das Innere der Destillationseinrichtung 200, insbesondere die Verdampfereinrichtung 201 und die Kondensatoreinrichtung 202 bei hoher Temperatur "durchgeheizt".

Das Umschalten vom offenen Kreislauf 226, 225 auf die Bypass-Leitungsverbindung 227, 228 erfolgt mittels Ventilen 242, 244. Diese können entweder manuell betätigt werden oder mittels einer Steuereinrichtung 240. Wie auch im Falle des unter Bezugnahme auf Figur 1 beschriebenen ersten Ausführungsbeispiel kann eine solche Steuereinrichtung 240 zeitgesteuert arbeiten oder in Abhängigkeit von Parametern wie dort angegeben.

Parallel zu der externen Wärmequelle 221 ist ein Wärmespeicher 230 vorgesehen, der aus der externen Wärmequelle 221 geladen wird und im zweiten Betriebszustand die nötige Wärme zur Verfügung stellen kann. Selbstverständlich kann der Wärmespeicher 230 auch im ersten Betriebszustand als Wärmequelle verwendet werden.

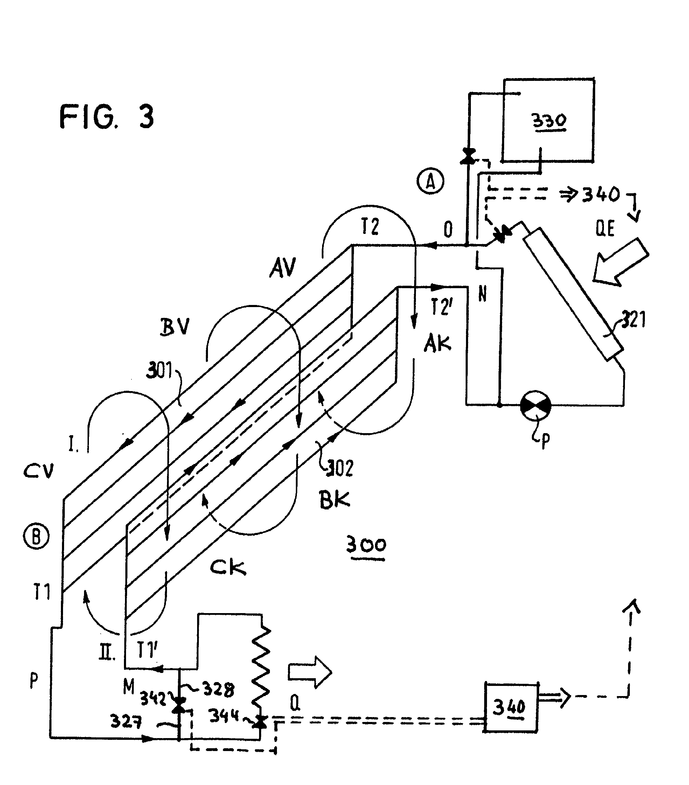

Bei dem in Figur 3 dargestellten Ausführungsbeispiel, welches von der Leitungsführung her dem in Figur 1 gezeigten Ausführungsbeispiel sehr ähnlich ist, sind die Verdampfereinrichtung 301 und die Kondensatoreinrichtung 302 vorzugsweise jeweils in einer Längsrichtung ausgedehnte Gebilde, die jeweils ein erstes Ende A mit höherer Temperatur und ein zweites Ende B mit niedrigerer Temperatur aufweisen und im Gegenstrom zueinander von dem Wärmeträger durchströmt werden. Dabei wird die Verdampfereinrichtung 301 vom ersten Ende A (entsprechend dem Punkt O) zum zweiten Ende B (entsprechend dem Punkt P) hin von dem Wärmeträger durchströmt, und die Kondensatoreinrichtung 302 wird im Gegenstrom dazu vom zweiten Ende B (entsprechend dem Punkt M) zum ersten Ende A (entsprechend dem Punkt N) hin von dem Wärmeträger durchströmt. Der Transport des verdampften Wassers von der Verdampfereinrichtung 301 zu der Kondensatoreinrichtung 302 erfolgt in einer Strömung im wesentlichen quer zu deren Längsrichtung. Dabei erfolgt im ersten Betriebszustand der Stofftransport des verdampften Wassers von Bereichen AV hoher Temperatur der Verdampfereinrichtung 301 zu Bereichen AK hoher Temperatur der Kondensatoreinrichtung 302 und von Bereichen mittlerer Temperatur BV der Verdampfereinrichtung 301 zu Bereichen mittlerer Temperatur BK der Kondensatoreinrichtung 302 und von Bereichen niedrigerer Temperatur CV der Verdampfereinrichtung 301 zu Bereichen niedrigerer Temperatur CK der Kondensatoreinrichtung 302. Hinsichtlich näherer Einzelheiten hierzu wird auf die DE 199 29 213 A1 des Anmelders verwiesen.

Im zweiten Betriebszustand, bei dem der Wärmeträger mit hoher Temperatur zum zweiten Ende B (entsprechend dem Punkt M) zugeführt wird, werden alle Bereich von Verdampfereinrichtung 301 und Kondensatoreinrichtung 302 auf praktisch dem hohen Temperaturniveau T2 "durchgeheizt".

Das Umschalten vom offenen Kreislauf 326, 325 auf die Bypass-Leitungsverbindung 327, 328 erfolgt mittels Ventilen 342, 344. Diese können entweder manuell betätigt werden oder mittels einer Steuereinrichtung 340. Wie auch im Falle des unter Bezugnahme auf Figur 1 beschriebenen ersten Ausführungsbeispiel kann eine solche Steuereinrichtung 340 zeitgesteuert arbeiten oder in Abhängigkeit von Parametern wie dort angegeben.

Parallel zu der externen Wärmequelle 321 ist ein Wärmespeicher 330 vorgesehen, der aus der externen Wärmequelle 321 geladen wird und im zweiten Betriebszustand die nötige Wärme zur Verfügung stellen kann. Selbstverständlich kann der Wärmespeicher 330 auch im ersten Betriebszustand als Wärmequelle verwendet werden.

## Patentansprüche

1. Verfahren zum Destillieren von Wasser aus Meerwasser, Brackwasser oder anderen verunreinigten Wässern, bei dem das Wasser unter Zufuhr von Wärme durch einen Wärmeträger an einer Verdampfereinrichtung (101; 201; 301) verdampft, in einer Strömung innerhalb einer die Verdampfereinrichtung (101; 201; 301) und eine Kondensatoreinrichtung (102; 202; 302) einschließenden Umhüllung (105; 205; 305) zwischen der Verdampfereinrichtung (101; 201; 301) und der Kondensatoreinrichtung (102; 202; 302) transportiert und an der von einem Wärmeträger durchströmten Kondensatoreinrichtung (102; 202; 302) unter Abfuhr von Wärme durch den Wärmeträger kondensiert und gesammelt wird, wobei die Wärme des Wärmeträgers nach dem Verlassen der Kondensatoreinrichtung (102; 202; 302) zusammen mit durch eine externe Wärmequelle (121; 221; 312) zugeführter Wärme bei einer hohen Temperatur (T2) zum Verdampfen des Wassers an der Verdampfereinrichtung (101; 201; 301) verwendet wird, und wobei in einem ersten Betriebszustand der Wärmeträger zu der Kondensatoreinrichtung (102; 202; 302) bei einer niedrigen Temperatur (T1') zugeführt wird, **dadurch gekennzeichnet, daß** in einem zweiten Betriebszustand der Warineträger zu der Kondensatoreinrichtung (102; 202; 302) mit einer Temperatur zugeführt wird, die höher ist als die niedrige Temperatur (T1'), mit der der Wärmeträger zu der Kondensatoreinrichtung (102; 202; 302) im ersten Betriebszustand zugeführt wird, wobei in dem zweiten Betriebszustand der Wärmeträger zu der Kondensatoreinrichtung (102; 202; 302) mit einer Temperatur zugeführt wird, die vorzugsweise nahe der hohen Temperatur (T2) liegt, und daß die Wärme des die Verdampfereinrichtung (101; 201; 301) verlassenden Wärmeträgers in dem ersten Betriebszustand an die Umgebung oder anderweitig abgeführt und in dem zweiten Betriebszustand der Kondensatoreinrichtung (102; 202; 302) zugeführt wird.

2. Verfahren nach Anspruch 1, **dadurch gekennzeichnet, daß** ein und derselbe Wärmeträger nacheinander durch die Kondensatoreinrichtung (102; 202; 302) und durch die Verdampfereinrichtung (101; 201; 301) geführt wird, wobei der Wärmeträger nach dem Verlassen der Kondensatoreinrichtung (102; 202; 302) durch die externe Wärmequelle (121; 221; 321) auf die hohe Temperatur (T2) aufgeheizt und der Verdampfereinrichtung (102; 202; 302) zugeführt wird.

3. Verfahren nach Anspruch 1 oder 2, **dadurch gekennzeichnet, daß** der Wärmeträger eine von den verunreinigten Wässern verschiedene Flüssigkeit ist und in der Verdampfereinrichtung (101; 301) durch flüssigkeitsundurchlässige, jedoch gut wärmeleitende Wandungen (119) von den verunreinigten Wässern getrennt ist, und daß der warmeträger in dem ersten Betriebszustand nach dem Verlassen der Verdampfereinrichtung (101; 301) gekühlt und/oder mit kaltem Wärmeträger gemischt und/oder durch kalten Wärmeträger ersetzt und der Kondensatoreinrichtung (102; 302) zugeführt wird, und daß der Wärmeträger im zweiten Betriebszustand nach dem Verlassen der Verdampfereinrichtung (101; 301) ohne Kühlung direkt der Kondensatoreinrichtung (102; 302) zugeführt wird.

4. Verfahren nach Anspruch 1 oder 2, **dadurch gekennzeichnet, daß** die verunreinigten Wässer selbst der Wärmeträger sind, wobei in der Verdampfereinrichtung (201) ein Teil des Wassers aus den verunreinigten Wässern verdampft wird, und daß der Wärmeträger in dem ersten Betriebszustand nach dem Verlassen der Verdampfereinrichtung (201) gekühlt und/oder mit kaltem Wärmeträger gemischt und/oder durch kalten Wärmeträger ersetzt und der Kondensatoreinrichtung (202) zugeführt wird, und daß der Wärmeträger in dem zweiten Betriebszustand nach dem Verlassen der Verdampfereinrichtung (201) ohne Kühlung direkt der Kondensatoreinrichtung (202) zugeführt wird.

5. Verfahren nach einem der Ansprüche 1 bis 4, **dadurch gekennzeichnet, daß** die Verdampfereinrichtung (301) und die Kondensatoreinrichtung (302) jeweils in einer Längsrichtung ausgedehnte Gebilde sind, die jeweils ein erstes Ende (A) mit höherer Temperatur und ein zweites Ende (B) mit niedrigerer Temperatur aufweisen, und im Gegenstrom zueinander von dem Wärmeträger durchströmt werden, wobei die Verdampfereinrichtung (301) vom ersten Ende (A) zum zweiten Ende (B) hin von dem Wärmeträger durchströmt wird, und die Kondensatoreinrichtung (302) im Gegenstrom dazu vom zweiten Ende (B) zum ersten Ende (A) hin von dem Wärmeträger durchströmt wird, und daß im zweiten Betriebszustand der Wärmeträger über eine Bypass-Leitungsverbindung (327, 328) vom zweiten Ende (B) der Verdampfereinrichtung (301) zum zweiten Ende der Kondensatoreinrichtung (302) zuruckgeleitet wird.

6. Vorrichtung zum Destillieren von Wasser aus Meerwasser, Brackwasser oder anderen verunreinigten Wässern, mit einer von einem Wärmeträger durchströmten Verdampfereinrichtung (101; 201, 301) zum Verdampfen des Wassers unter Zufuhr von Wärme durch den Wärmeträger, einer von einem Wärmeträger durchströmten Kondensatoreinrichtung (102; 202; 302) zum Kondensieren des Wassers unter Abfuhr von Wärme durch den Wärmeträger, wobei in einem ersten Betriebszustand der Wärmeträger der Kondensatoreinrichtung (102; 202; 302) bei einer niedrigen Temperatur (T1') zuführbar ist, einer an der Kondensatoreinrichtung (102; 202; 302) angeordneten Vorrichtung (106; 206; 306) zum Sammeln des kondensierten Wassers, einer die Verdampfereinrichtung (101; 201; 301) und die Kondensatoreinrichtung (102; 202; 302) einschließenden Umhüllung, welche einen Strömungsweg für eine das verdampfte Wasser zwischen Verdampfereinrichtung (101; 201; 301) und Kondensatoreinrichtung (102; 202; 302) transportierende Strömung begrenzt, wobei die Wärme des Wärmeträgers nach dem Verlassen der Kondensatoreinrichtung (102; 202; 302) zusammen mit durch eine externe Wärmequelle (121; 221; 312) zugeführter Wärme bei einer hohen Temperatur (T2) zum Verdampfen des Wassers an der verdampfereinrichtung (101; 201; 301) verwendbar ist, **dadurch gekennzeichnet, daß** in einem zweiten Betriebszustand der Wärmeträger zu der Kondensatoreinrichtung (102; 202; 302) mit einer Temperatur zuführbar ist, die höher als die niedrige Temperatur (T1') ist, mit der der Wärmeträger zu der Kondensatoreinrichtung (102; 202; 302) im ersten Betriebszustand zugeführt wird, wobei in dem zweiten Betriebszustand der Wärmeträger zu der Kondensatoreinrichtung (102; 202; 302) mit einer Temperatur zuführbar ist, die vorzugsweise nahe der hohen Temperatur (T2) liegt, und daß die Wärme des die Verdampfereinrichtung (101; 201; 301) verlassenden Wärmeträgers in dem ersten Betriebszustand an die Umgebung oder anderweitig abführbar und in dem zweiten Betriebszustand der Kondensatoreinrichtung (102; 202; 302) zuführbar ist.

7. Vorrichtung nach Anspruch 6, **dadurch gekennzeichnet, daß** ein und derselbe Wärmeträger nacheinander durch die Kondensatoreinrichtung (102; 202; 302) und durch die Verdampfereinrichtung (101; 201; 301) geführt wird, wobei der Wärmeträger nach dem Verlassen der Kondensatoreinrichtung (102; 202; 302) durch die externe Wärmequelle (121; 221; 321) auf die hohe Temperatur (T2) aufgeheizt und der Verdampfereinrichtung (101; 201; 301) zugeführt wird.

8. Vorrichtung nach Anspruch 6 oder 7, **dadurch gekennzeichnet, daß** der Wärmeträger ein von den verunreinigten Wässern verschiedene Flüssigkeit ist und in der Verdampfereinrichtung (101; 301) durch flüssigkeitsundurchlässige, jedoch gut wärmeleitende Wandungen (119) von den verunreinigten Wässern getrennt ist, und daß der Wärmeträger in dem ersten Betriebszustand nach dem Verlassen der Verdampfereinrichtung (101; 301) gekühlt und/oder mit kaltem Wärmeträger gemischt und/oder durch kalten Warmeträger ersetzt wird und der Kondensatoreinrichtung (102; 302) zuführbar ist, und daß der Wärmeträger im zweiten Betriebszustand nach dem Verlassen der Verdampfereinrichtung (101; 301) ohne Kühlung direkt der Kondensatoreinrichtung (102; 302) zuführbar ist.

9. Vorrichtung nach Anspruch 6 oder 7, **dadurch gekennzeichnet, daß** die verunreinigten Wässer selbst der Wärmeträger sind, wobei in der Verdampfereinrichtung (201) ein Teil des Wassers aus den verunreinigten Wässern verdampft wird, und daß der Wärmeträger in dem ersten Betriebszustand nach dem Verlassen der Verdampfereinrichtung (201) gekühlt und/oder mit kaltem Wärmeträger gemischt und/oder durch kalten Wärmeträger ersetzt wird und der Kondensatoreinrichtung (202) zuführbar ist, und daß der Wärmeträger in dem zweiten Betriebszustand nach dem Verlassen der Verdampfereinrichtung (201) ohne Kühlung direkt der Kondensatoreinrichtung (202) zuführbar ist.

10. Vorrichtung nach einem der Ansprüche 6 bis 9, **dadurch gekennzeichnet, daß** daß die Verdampfereinrichtung (301) und die Kondensatoreinrichtung (302) jeweils in einer Längsrichtung ausgedehnte Gebilde sind, die jeweils ein erstes Ende (A) mit höherer Temperatur und ein zweites Ende (B) mit niedrigerer Temperatur aufweisen, und im Gegenstrom zueinander von dem Wärmeträger durchströmbar sind, wobei die Verdampfereinrichtung (301) vom ersten Ende (A) zum zweiten Ende (B) hin von dem Wärmeträger durchströmt wird, und die Kondensatoreinrichtung (302) im Gegenstrom dazu vom zweiten Ende (B) zum ersten Ende (A) hin von dem Wärmeträger durchströmt wird, und daß im zweiten Betriebszustand der Wärmeträger über eine Bypass-Leitungsverbindung (327, 328) vom zweiten Ende (B) der Verdampfereinrichtung (301) zum zweiten Ende der Kondensatoreinrichtung (302) zurückgeleitet wird.
